# NEUE EUROPÄISCHE PATENTSCHRIFT

(11) **EP 0 500 496 B2**
(45) Veröffentlichungstag und Bekanntmachung des Hinweises auf die Entscheidung über den Einspruch: **30.01.2002**
(45) Hinweis auf die Patenterteilung: 27.08.1997
(21) Anmeldenummer: 92810100.5
(22) Anmeldetag: 12.02.1992
(51) Int. Cl.: C08K 5/3492, B32B 27/18

(54) **Stabilisierte Polymere mit Heteroatomen in der Hauptkette**
Stabilised polymers containing heteroatoms in the main chain
Polymères stabilisés contenants des hétéroatomes dans la chaîne principale

(30) Priorität: 21.02.1991 CH 52891
(43) Veröffentlichungstag der Anmeldung: 26.08.1992
(73) Patentinhaber: Ciba Specialty Chemicals Holding Inc., 4057 Basel (CH)
(72) Erfinder: Schmitter, André, Dr., F-68220 Hegenheim (FR); Burdeska, Kurt, Dr., CH-4058 Basel (CH); Slongo, Mario, Dr., CH-1712 Tafers (CH); Birbaum, Jean-Luc, Dr., CH-1700 Fribourg 4 (CH)

(56) Entgegenhaltungen:
- EP-A- 0 280 653
- EP-A- 0 434 608
- CH-A- 484 695
- US-A- 3 268 474

## Beschreibung

Die Erfindung betrifft stabilisierte Polymere mit Heteroatomen in der Hauptkette, die als Stabilisator ein 2-Hydroxyphenyl-s-triazin mit bestimmten Substituenten enthalten.

Es ist bekannt, Polymere gegen Schädigung durch Licht, Sauerstoff und Wärme durch den Zusatz eines 2-Hydroxyphenyl-s-triazins der Formel 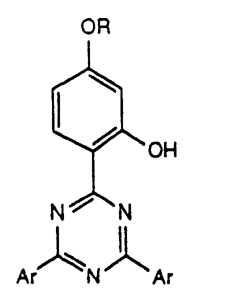 zu stabilisieren, wobei R Wasserstoff oder ein organischer Rest sein kann und Ar aromatische Reste sind, die keine Hydroxylgruppen tragen, siehe US-A-3 244 708 und CH-B-480 091. Solche Verbindungen sind UV-Absorber und wurden auch zum Stabilisieren von Photomaterialien (US-A-3 843 371) oder von Lacken (US-A-4 619 956) vorgeschlagen.

Hierbei wurden konkret solche Triazinderivate verwendet, worin Ar ein 2,4-Dimethylphenylrest ist, weil diese Verbindungen relativ gut zugänglich sind. Neuerdings wurden Syntheseverfahren entwickelt, die auch solche Triazine mit anderen Arylresten gut zugänglich machen (EP-A-395 938).

Ueberraschend wurde nun gefunden, daß solche Triazine, in denen Ar ein Phenyl- oder p-Totylrest ist, in thermoplastischen Polymeren, die in der Hauptkette Heteroatome enthalten, eine besonders gute Stabilisatorwirkung zeigen, die diejenige von Triazinen, in denen Ar ein 2,4-Dimethylphenylrest ist, klar übertrifft.

Die Erfindung betrifft daher eine gegen Schädigung durch Licht, Sauerstoff und Hitze stabilisierte Polymerzusammensetzung, enthaltend
a) mindestens ein thermoplastisches Polymer, das in der Hauptkette Heteroatome enthält, und
b) als Stabilisator mindestens eine Hydroxyphenyltriazin-Verbindung der Formel I, 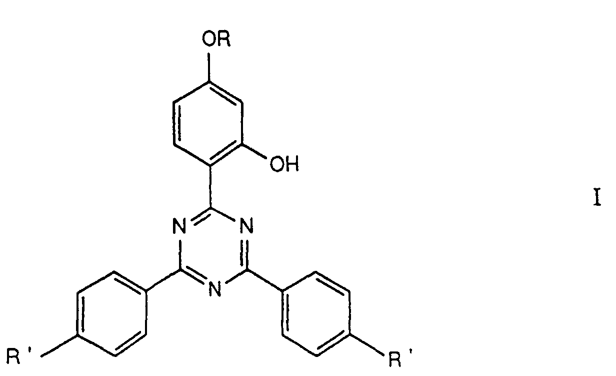
worin R C₁-C₁₈-Alkyl, durch Halogen oder C₁-C₁₂-Alkoxy substituiertes C₂-C₆-Alkyl oder Benzyl bedeutet und R' Wasserstoff oder Methyl bedeutet, wobei Zusammensetzungen ausgenommen sind, welche durch Behandeln von Fasermaterial der Komponente (a) mit dem Stabilisator der Komponente (b) erhalten werden.

Polymere, die Heteroatome in der Hauptkette enthalten, sind vor allem O.S und N enthaltende Polymere. Beispiele für solche Polymere sind die folgenden Klassen von thermoplastischen Polymeren:
1 Polyacetale wie Polyoxymethylen, sowie solche Polyoxymethylene die Comonomere, wie z.B. Ethylenoxid, enthalten, Polyacetale, die mit thermoplastischen Polyurethanen, Acrylaten oder MBS modifiziert sind,
2. Polyphenylenoxide und -sulfide und deren Mischungen mit Styrolpolymeren oder Polyamiden,
3. Polyamide und Copolyamide, z.B. solche, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einen Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
4. Polyharnstoffe, Polyimide, Polyamid-imide und Polybenzimidazole.
5. Polyester, z.B. solche, die sich von Dicarbonsäuren und Dialkoholen und/oder von Hydroxycarbonsäuren oder den entsprechenden Lactonen ableiten, wie Polyethylenterephthalat, Polybutylenterephthalat, Poly- 1,4-dimethylolyclohexanterephthalat, Polyhydroxybenzoate, sowie Block-Potyether-ester, die sich von Polyethern mit Hydroxylendgruppen ableiten; ferner mit Polycarbonaten oder MBS modifizierte Polyester.
6. Polycarbonate und Polyestercarbonate, insbesondere aromatische Polycarbonate, wie z.B. solche basierend auf 2,2-Bis(4-hydroxyphenyl)-propan oder 1,1-Bis(4-hydroxyphenyl)-cyclohexan.
7. Polysulfone, Polyethersulfone und Polyetherketone, insbesondere aromatische Polymere dieser Klasse.
8. Mischungen (Polyblends) solcher Polymerer untereinander oder mit anderen Polymeren, z.B. mit Polyolefinen, Polyacrylaten, Polydienen oder anderen Elastomeren als Schlagzähmodifikatoren.

Bevorzugt sind darunter die Polycarbonate, Polyester, Polyamide, Polyacetale, Polyphenylenoxide und Polyphenylensulfide, insbesondere aber die Polycarbonate. Darunter sind insbesondere solche Polymere zu verstehen, deren konstitutionelle Repetiereinheit (constitutional repeating unit) der Formel 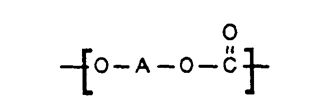 entspricht, worin A einen divalenten phenolischen Rest darstellt. Beispiele für A sind u.a. in US-A-4 960 863 und DE-A-3 922 496 genannt. A kann beispielsweise abgeleitet sein von Hydrochinon, Resorcin, von Dihydroxybiphenylen oder Bisphenolen im weitesten Sinn wie Bis-(hydroxyphenyl)-alkanen, -cycloalkanen, -sulfiden, -ethern, -ketonen, -sulfonen, -sulfoxiden, α, α'-Bis-(hydroxyphenyl)-diisopropylbenzolen, z.B. von den Verbindungen 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis(3,5-dibrom-4-hydroxyphenyl)propan, 1,1-Bis-(4-hydroxyphenyl)-cyclohexan oder von den Verbindungen der Formeln

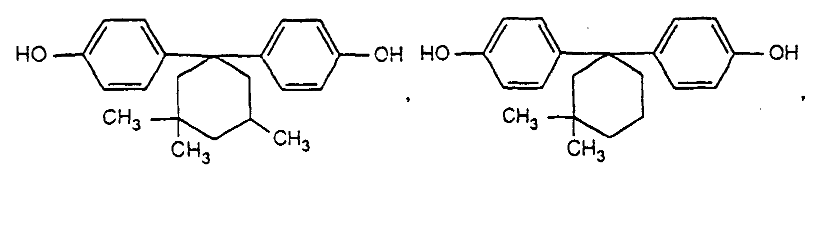

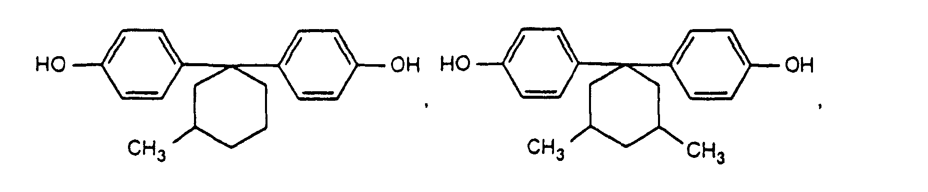

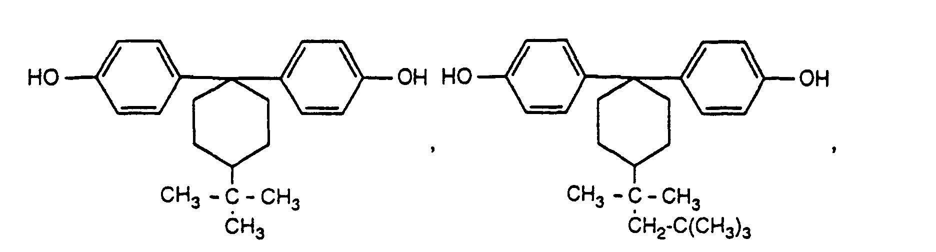

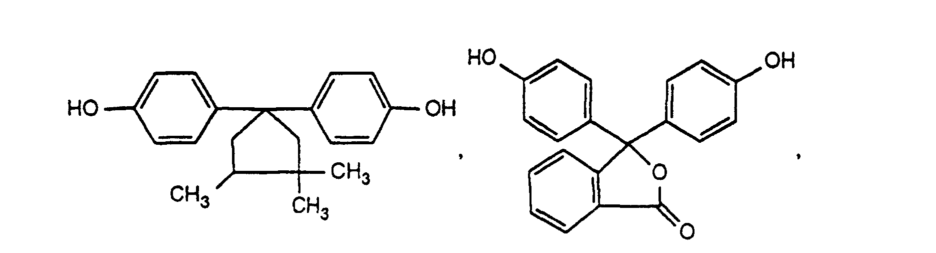

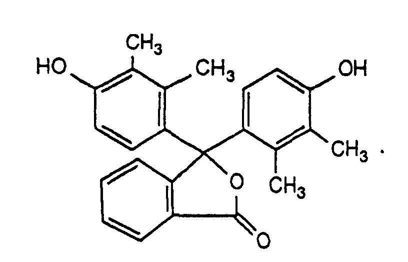

Die Polymere der Komponente a) können linear oder verzweigt sein. Die formgebende Verarbeitung dieser Polymere geschieht bei relativ hoher Temperatur, z.B. wird Polycarbonat bei 220 - 330°C spritzgegossen. Bei diesen Temperaturen sind die meisten der üblichen Lichtstabilisatoren und Antioxidantien instabil und beginnen sich zu zersetzen. Die oben erwähnten erfindungsgemäßen Triazinderivate sind jedoch extrem temperaturstabil und sind daher für die Stabilisierung der genannten Polymeren besonders geeignet.

Wenn in der Formel I R C₁-C₁₈-Alkyl ist, so kann dies lineares oder verzweigtes Alkyl sein und kann z.B. Methyl, Ethyl, Propyl, Isopropyl, Butyl, Isobutyl, Pentyl, Hexyl, 2-Ethylbutyl, Heptyl, Octyl, 2-Ethylhexyl, Nonyl, Decyl, Dodecyl, Tetradecyl oder Octadecyl sein. R als durch Halogen oder C₁-C₁₂-Alkoxy substituiertes C₂-C₆-Alkyl kann z.B. 2-Chlorethyl, 2-Fluorethyl, 2-Methoxyethyl, 2-Ethoxyethyl, 2-Isopropoxyethyl, 2-Methoxypropyl, 3-Butoxypropyl, 2-Butoxyethyl, 2-Hexyloxyethyl, 2-Octyloxyethyl oder 2-Dodecyloxyethyl sein.

Bevorzugt ist R C₁-C₁₂-Alkyl oder Benzyl, insbesondere C₃-C₆-Alkyl, vor allem Propyl.

In Formel I bedeutet R' bevorzugt Wasserstoff.

Beispiele für Verbindungen der Formel I sind:
2,4-Diphenyl-6-(2-hydroxy-4-methoxyphenyl)-1,3,5-triazin
2,4-Diphenyl-6-(2-hydroxy-4-ethoxyphenyl)-1,3,5-triazin
2,4-Diphenyl-6-(2-hydroxy-4-propyloxyphenyl)-1,3,5-triazin
2,4-Diphenyl-6-(2-hydroxy-4-butoxyphenyl)-1,3,5-triazin
2,4-Diphenyl-6-(2-hydroxy-4-hexyloxyphenyl)-1,3,5-triazin
2,4-Diphenyl-6-(2-hydroxy-4-octyloxyphenyl)-1,3,5-triazin
2,4-Diphenyl-6-(2-hydroxy-4-dodecyloxyphenyl)-1,3,5-triazin
2,4-Diphenyl-6-(2-hydroxy-4-benzyloxyphenyl)-1,3,5-triazin
2,4-Diphenyl-6-(2-hydroxy-4-(2-butoxyethoxy)phenyl)-1,3,5-triazin
2,4-Di-p-tolyl-6-(2-hydroxy-4-methoxy-phenyl)-1,3,5-triazin
2,4-Di-p-tolyl-6-(2-hydroxy-4-propyloxyphenyl)-1,3,5-triazin
2,4-Di-p-tolyl-6-(2-hydroxy-4-butoxyphenyl)-1,3,5-triazin
24-Di-p-tolyl-6-(2-hydroxy-4-hexyloxyphenyl)-1,3,5-triazin
2,4-Di-p-tolyl-6-(2-hydroxy-4-pentoxyphenyl)-1,3,5-triazin
2,4-Di-p-tolyl-6-(2-hydroxy-4-octyloxyphenyl)-1,3,5-triazin
2,4-Di-p-tolyl-6-(2-hydroxy-4-benzyloxyphenyl)-1,3,5-triazin
2,4-Di-p-tolyl-6-(2-hydroxy-4-(2-hexyloxyethoxy)phenyl)-1,3,5-triazin

Die Verbindungen der Formel I sind bekannte Verbindungen oder können in Analogie zu bekannten Verbindungen hergestellt werden. Die Herstellung kann prinzipiell durch Veretherung der entsprechenden 2,4-Diaryl-6-(2,4-dihydroxyphenyl)-1,3,5-triazine geschehen. Die Veretherung erfolgt selektiv in 4-Stellung, weil die OH-Gruppe in 2-Stellung durch Wasserstoffbrückenbindung stensch gehindert ist. Die Herstellung der 2,4-Dihydroxyphenyttriazine und ihre Veretherung ist z.B. beschrieben in Helv. Chim. Acta 55 (1972), 1566-95; EP-A-395 938; US-A-3113 887; US-A-3 242 175 oder US-A-3 244 708.

Die Menge des zu verwendenden Stabilisators richtet sich nach dem zu stabilisierenden Polymeren und der beabsichtigten Verwendung des stabilisierten Polymeren. Im allgemeinen enthält die erfindungsgemäße Potymerzusammensetzung auf 100 Gew.-Teile des Polymeren (Komponente a) 0,1 bis 15, besonders 0,1 bis 5 Gew.-Teile des Stabilisators (Komponente b).

Der Stabilisator (Komponente b) kann auch ein Gemisch sein von zwei oder mehr Verbindungen der Formel I. Außer dem Stabilisator der Formel I kann die Polymer-zusammensetzung auch andere bekannte Stabilisatoren enthalten, wie z.B. Antioxidantien, Lichtschutzmittel, Metalldesaktivatoren oder Verarbeitungsstabilisatoren. Beispiele hierfür sind die folgenden Verbindungen.

1. Antioxidantien
1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert-butyl-4-i-butylphenol, 2,6-Di-cyclopentyl-4-methylphenol, 2-(α-Methylcyclohexyl)-4,6-dimethylphonol, 2,6-Di-octadecyl-4-methylpnenol, 2,4,6-Tricyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 24-Dimethyl-6-(1'-methyl-tridec-1'-yl)-phenol und Mischungen davon.
1.2 Alkylthiomethylphenole, z.B. 2,4-Di-octylthiomethyl-6-tert.-butylphenol, 2,4-Di-octylthiomethyl-6-methylphenol, 2,4-Di-octylthiomethyl-6-ethylphenol, 2,6-Di-dodecyithiomethyl-4-nonylphenol.
1.3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.
1.4. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis(6-tert.butyl-2-methylphenol), 4,4'-Thio-bis-(3,6-di-sec.-amylphenol), 4,4'-Bis(2,6-dimethyl-4-hydroxyphenyl)-disulfid.
1.5 Alkyliden-Bisphenole, z.B. 2,2'-Methylen-bis-(6-tert.butyl-4-methylphenol), 2,2'Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylenbis-(6-nonyl-4-methylphenol), 2.2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert,butyl-4-hydroxy-2-methyl-phenyl)-3-n-dodecylmercaptobutan, Ethylenglycol-bis-[3,3-bis-(3'-tert -butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methylphenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.
1,6 O- N- und 5-Benzylverbindunpen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.
1.7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylhenzyl)-malonat. Di-dodecylmercaptoethyl-2,2-bis-(3,5-di-tert.-butyl-4-hydroxybenzyl)-malonat, Di- [4-(1,1,3,3-tetramethylbutyl)-phenyl]-2,2-bis-(3,5-di-tert.-butyl-4-hydroxybenzyl)-malonat.
1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.
1.9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-di-methylbenzyl)-isocyanurat, 2,4,6-Tris-(3,5-di-tert.-butyl-4-hydroxyphenylethyl)-1,3,5-triazin, 1,3,5-Tris-(3,5-di-tert. butyl-4-hydroxyphenylpropionyl)-hexahydro-1,3,5-triazin, 1,3,5-Tris-(3,5-dicyclohoxyl-4-hydroxybenzyl)-isocyanurat.
1.10. Benzylphosphonate, z.B. Dimethyl-2,5-di-tert.-butyl-4-hydroxybenzylphosphonat, Diethyl-3,5-di-tert. Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.
1.11. Acylaminophenole, z.B. 4-Hydroxy-laurinsäureanilid, 4-Hydroxystearinsäureanilid, N-(3,5-di-tert.butyl4-hydroxyphenyl)-carbaminsäureoctylester.
1.12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(3,5-Dicyclohexyl-4-hydroxyphenyl)-propionsäure mit ein- oder mehrwertigen Alkoholen, wie z B. mit Methanol, Ethanol, Octadecanol, 1,6-Hexandiol, 1,9-Nonandiol, Ethylenglycol, 1,2-Propandiol. Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.
1.15 Ester der 3,5-Di-tert -butyl-4-hydroxyphenylessigsäure mit ein- oder mehrwertigen Alkoholen. wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan 4-Hydroxymethyl-1-phospha-2,6,7-trioxabicyclo-[2,2,2]-octan.
1.16 Amide der β-(3,5-Di-tert.butyl-4-hydroxyphenyl)-propionsäure, wie z.B N N'-Bis(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel
2.1 2-(2'-Hydroxyphenyl)-benztriazole, wie z.B. 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-, Mischung aus 5-Chlor-3'-tert.-butyl-5'-(2-octyloxycarbonylethyl)- und 5-Chlor-3'-tert.-butyl-5'-[2-(2-ethylhexyloxy)-carbonylethyl]-, 5-Chlor-3'-tert.-butyl-5'-(2-methoxycarbonylethyl)-, 5'-(2-octyloxycarbonylethyl)-, 3'-tert.-Butyl-5'-(2-octyloxycarbonylethyl)-, 3'-tert.-Butyl-5'-[2-(2-ethylhexyloxy)-carbonylethyl]-, 3'-Dodecyl-5'-methyl- und 3'-tert.-Butyl-5'-(2-isooctyloxycarbonylethyl)-2'-hydroxyphenyl-2H-benztriazol(2), 2,2'-Methylen-bis[4-(1,1,3,3-tetramethylbutyl)-6-benztriazol-2-yl-phenol]; Umesterungsprodukt von 2-[3'-tert.-Butyl-5'-(2-methoxycarbonylethyl)-2'-hydroxy-phenyl]-2H-benztriazol mit Polyethylenglycol 300; [R-CH₂CH₂-COO(CH₂)₃ 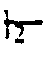 mit R=3'-tert.-Butyl-4'-hydroxy-5'-2H-benzotriazol-2-yl-phenyl.
2,2,2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester, 3,5-Di-tert.-butyl-4-hydroxybenzoesäure-octadecylester, 3,5-Di-tert.-butyl-4-hydroxybenzoesäure-2-methyl-4,6-di-tert.-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1 -Phenyl-4-lauroyl-5-hydroxy-pyrazols, gegebenenfalls mit zusätzlichen Liganden.
2.6. Sterisch gehinderte Amine, wie z.B. Bis-(2,2,6,6-tetramethyl-piperidyl)-sebacat, Bis-(2,2,6,6-tetramethylpiperidyl)-succinat, Bis-(1,2,2,6,6-pentamethylpiperidyl)-sebacat, n-Butyl-3,5-di-tert.butyl-4-hydroxybenzylmalonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2.2,6.6-Tetramethyl4-piperidyl)-hexamethylendiamin und 4-tert.Octylamino-2,6-dichlor- 1,3,5-s-triazin, Tris-(2,2,6,6-tetramethyl4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert.-butylbenzyl)-malonat, 3-n-Octyl-7,7,9,9-tetramethyl-1,3,8-triazasprio[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N, N'-Bis-(2,2,6,6-tetramethyl-4-piperidyl)-hexamethylendiamin und 4-Morpholino-2,6-dichlor- 1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)- 1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2.5-dion,
2.7 Oxalsaurediamide, wie z.B. 4,4'-Di-octyloxy-oxanilid, 2,2'-Di-octyloxy-5,5'-di-tert.-butyl-oxanilid, 2,2'-Didodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert butyl-2'-ethyloxanilid und dessen Gemisch mit 2-Ethoxy-2'-ethyl-5,4'-di-tert butyl-oxanilid, Gemische von o- und p-Methoxy- sowie von o- und p-Ethoxy-di-substiluierten Oxaniliden
2.8 Weitere 2-(2-Hydroxyphenyl)-1,3,5-triazine. wie z.B 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazi n, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N, N'-Diacetal-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,6-di-tert.-butyl-4-methylphenyl Bis-(2,4-di-tert.butylphenyl)-pentaerythritdiphosphit,)-pentaerythritdiphosphit, Bis-isodecyloxy-pentaerythritdiphosphit, Bis-(2,4-di-tert.-butyl-6-methylphenyl)-pentaerythritdiphosphit, Bis-(2,4,6-tri-tert.-butylphenyl)-pentaerythritdiphsophit, Tristearyl-sorbit-triphosphit, Tetrakis-(2,4-di-tert.butylphenyl)-4,4'-biphenylen-diphosphonit, 6-Isooctyloxy-2,4,8,10-tetra-tert.-butyl-12H-dibenz[d,g]-1,3,2-dioxaphosphocin, 6-Fluor-2,4,8,10-tetra-tert.butyl-12-methyl-dibenz[d,g]- 1,3,2-dioxaphosphocin.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisutfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer or Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Der Zusatz des Stabilisators und gegebenenfalls weiterer Zusätze zum Polymeren erfolgt zweckmäßigerweise vor der formgebenden Verarbeitung, beispielsweise durch Mischen der pulverfömigen Komponenten oder durch Zusatz des Stabilisators zur Schmelze oder Lösung des Polymeren.

Die Erfindung betrifft daher auch ein Verfahren zum Stabilisieren von thermoplastischen Polymeren, die in der Hauptkette Heteroatome enthalten, gegen deren Schädigung durch Licht, Sauerstoff und Hitze, das dadurch gekennzeichnet ist, daß man diesen als Stabilisator mindestens eine Verbindung der Formel I zusetzt, sowie die Verwendung von Verbindungen der Formel I zum Stabilisieren von thermoplastischen Polymeren, die in der Hauptkette Heteroatome enthalten, gegen Schädigung durch Licht, Sauerstoff und Hitze.

Die so erhaltenen stabilisierten Polymerzusammensetzungen können nach den üblichen Methoden, wie z B durch Heißpressen, Spinnen, Extrudieren oder Spritzgießen, in geformte Gegenstande überführt werden, wie z B in Fasern. Folien, Bändchen, Platten, Stegplatten, Gefäße, Rohre und sonstige Profile.

Die Erfindung betrifft daher weiterhin die Verwendung der erfindungsgemäßen Polymerzusammensetzung zur Herstellung eines geformten Gegenstandes.

Von Interesse ist auch die Verwendung in Mehrschichtsystemen. Hierbei wird eine erfindungsgemäße Polymerenzusammensetzung mit einem relativ hohen Gehalt an Stabilisator der Formel I, beispielsweise 5 - 15 Gew.-%. in dünner Schicht (10-100 µm) auf einen geformten Gegenstand aus einem Polymer, das wenig oder keinen Stabilisator der Formel I enthalt, aufgebracht. Das Aufbringen kann zugleich mit der Formgebung des Grundkörpers geschehen, z.B durch sogenannte Coextrusion. Das Aufbringen kann aber auch auf den fertig geformten Grundkörper geschehen, z.B. durch Lamination mit einem Film oder durch Beschichtung mit einer Lösung. Die äußere Schicht bzw. die äußeren Schichten des fertigen Gegenstandes haben die Funktion eines UV-Filters, der das Innere des Gegenstandes gegen UV-Licht schützt. Die äußere Schicht enthält vorzugsweise 5-15 Gew.%, insbesondere 5-10 Gew.%, mindestens eines Stabilisators der Formel I.

Die Verwendung der erfindungsgemäßen Polymerzusammensetzung zur Herstellung von Mehrschichtsystemen, wobei die äußere(n) Schicht(en) in einer Dicke von 10-100 µm aus einer erfindungsgemäßen Polymersuzammensetzung besteht, während die innere Schicht aus einem Polymeren besteht, das gegebenenfalls wenig oder keinen Stabilisator der Formel I enthält, stellt daher einen weiteren Gegenstand der Erfindung dar.

Von besonderem Interesse ist die Verwendung einer erfindungsgemäßen Polymerzusammensetzung, worin die Komponente (a) ein Polycarbonat ist, zur Herstellung von Mehrschichtsystemen.

Die so stabilisierten Polymere zeichnen sich aus durch hohe Witterungsbeständigkeit, vor allem durch hohe Beständigkeit gegen UV-Licht. Sie behalten dadurch auch im Außengebrauch lange Zeit ihre mechanischen Eigenschaften sowie ihre Farbe und ihren Glanz.

Die folgenden Beispiele erläutern die Erfindung näher, ohne sie auf die Beispiele zu beschränken. Darin beziehen sich Teile und Prozente auf Gewichtsteile und Gewichtsprozente; Raumtemperatur bedeutet jeweils eine Temperatur zwischen 20 und 25°C. Verwendet werden die folgenden UV-Absorber:
- Ph-1: 2,4-Diphenyl-6-(2-hydroxy-4-propyloxyphenyl)-1,3,5-triazin;
- Ph-2: 2,4-Diphenyl-6-(2-hydroxy-4-benzyloxyphenyl)-1,3,5-triazin;
- Ph-3: 2,4-Diphenyl-6-(2-hydroxy-4-butyloxyphenyl)-1,3,5-triazin;
- Ph-4: 2,4-Diphenyl-6-(2-hydroxy-4-hexyloxyphenyl)-1,3,5-triazin;
- Ph-5: 2,4-Diphenyl-6-(2-hydroxy-4-methoxyphenyl)-1,3,5-triazin;
- To-1: 2,4-Di-p-tolyl-6-(2-hydroxy-4-propyloxyphenyl)-1,3,5-triazin;
- To-2: 2,4-Di-p-tolyl-6-(2-hydroxy-4-benzyloxyphenyl)-1,3,5-triazin:
- To-3: 2,4-Di-p-tolyl-6-(2-hydroxy-4-butyloxyphenyl)-1,3,5-triazin;
- To-4: 2,4-Di-p-tolyl-6-(2-hydroxy-4-hexyloxyphenyl)-1,3,5-triazin;
- To-5: 2,4-Di-p-tolyl-6-(2-hydroxy-4-methoxyphenyl)-1,3,5-triazin;
- Xy-1: 2,4-Di(2,4-dimethylphenyl)-6-(2-hydroxy-4-propyloxyphenyl)-1,3,5-triazin (Vergleich);
- Xy-2: 2,4-Di(2,4-dimethylphenyl)-6-(2-hydroxy-4-benzyloxyphenyl)-1,3,5-triazin (Vergleich);
- Xy-3: 2,4-Di(2,4-dimethylphenyl)-6-(2-hydroxy-4-butyloxyphenyl)-1,3,5-triazin (Vergleich);
- Xy-4: 2,4-Di(2,4-dimethylphenyl)-6-(2-hydroxy-4-hexyloxyphenyl)-1,3,5-triazin (Vergleich);
- Xy-5: 2,4-Di(2,4-dimethylphenyl)-6-(2-hydroxy-4-methoxyphenyl)-1,3,5-triazin (Vergleich).

Beispiel 1: In 50 g Methylenchlorid werden 10 g Polyarbonat-Pulver (Lexan® 115) unter Rühren bei Raumtemperatur gelöst, was mehrere Stunden benötigt. Dazu kommen 0.1 g, 0,2 g oder 0,5 g UV-Absorber, entsprechend 1, 2 und 5 % Zusatzkonzentration. Aus diesen Lösungen werden Filme von 20 µm Dicke gegossen.

Die Filme werden in einem Atlas Weatherometer Cl 65 bei einer Schwarztafeltemperatur von 63°C und einer relativen Feuchte von 60 % belichtet. In regelmäßigen Intervallen wird die Verfärbung der Proben durch Messung des Yellowness Index (YI, Methode ASTM D 1925) überprüft. In Tabelle 1 ist die Belichtungszeit bis zu einem Yellowness-Index von 7 angegeben.

Anschließend werden die Filme weiter belichtet bis zur Versprödung, die sich durch Bildung von Rissen in den Filmen anzeigt. Die Belichtungsdauer bis zur Versprödung ist ebenfalls in Tabelle 1 aufgeführt.

**Tabelle 1:**

| Belichtungszeit (h) bis zum Erreichen eines Yellowness Index (YI) = 7 sowie bis zum Verspröden | | |
|---|---|---|
| | Belichtungszeit (h) bis | |
| UV-Absorber | YI=7 | Versprödung |
| keiner | 990 | 1100 |
| 1 % Xy-1 | 1700 | 3900 |
| 1 % Ph-1 | 2200 | 4100 |
| 1 % To-1 | 2100 | 4020 |
| 2 % Xy-1 | 1800 | 4500 |
| 2 % Ph-1 | 2300 | 7740 |
| 2 % To-1 | 2100 | 6680 |
| 5 % Xy-1 | 1900 | 6000 |
| 5 % Ph-1 | 5700 | 10990 |
| 5 % To-1 | 4000 | 10990 |

Beispiel 2: Nach der in Beispiel 1 beschriebenen Vorschrift hergestellte Filme werden in einem Umluftofen bei 140°C gealtert. Wie in Beispiel 1 werden die Alterungszeit bis zum Erreichen eines Yellowness-Index von 7 sowie die Zeit bis zur Versprödung gemessen.

Tabelle 2 zeigt die erhaltenen Resultate.

**Tabelle 2:**

| Alterungszeit (h) bis zum Erreichen eines Yellowness Index (YI) = 7 sowie bis zum Verspröden | | |
|---|---|---|
| | Zeit in Stunden bei 140°C bis | |
| UV-Absorber | YI=7 | Versprödung |
| 1 % Xy-1 | 500 | 2100 |
| 1 % Ph-1 | 3250 | 3250 |
| 1 % To-1 | 2440 | 2900 |
| 2 % Xy-1 | 300 | 1500 |
| 2 % Ph-1 | 3350 | 3500 |
| 2 % To-1 | 1300 | 2350 |
| 5 % Xy-1 | 120 | 700 |
| 5 % Ph-1 | 2940 | 3000 |
| 5 % To-1 | 1150 | 1700 |

Beispiel 3: Polycarbonat-Pulver wird mit 0,3 % verschiedener UV-Absorber vermischt und in einem Doppelschnekken-Extruder bei 275°C Massetemperatur und 25 Upm zu Granulat verarbeitet.

Das Granulat wird auf einer Spritzgußmaschine (240/300°C/75 bar) zu Platten von 67x43x2 mm verarbeitet. Die Platten werden in einem Atlas Weatherometer Cl 65 wie in Beispiel 1 belichtet. Tabelle 3 gibt die Belichtungszeit bis zu einem Yellowness-Index von 25 (YI gemessen nach ASTM D-1925) an.

**Tabelle 3:**

| Belichtungszeit (h) bis zum Erreichen eines Yellowness Index (YI) = 25 | |
|---|---|
| UV-Absorber | Belichtungszeit (h) bis YI= 25 |
| keiner | 900 |
| 0,3%Xy-1 | 2700 |
| 0,3%Ph-1 | 3500 |
| 0,3%To-1 | 3100 |

Beispiel 4: Nach der in Beispiel 1 angegebenen Methode werden Polycarbonatfilme enthaltend 2 Gew-% an UV Absorber hergestellt und belichtet. Tabelle 4 gibt die Belichtungszeit an. nach der ein Yellowness-lndex von 7 erreicht ist.

Anschließend werden die Filme weiter belichtet bis zur Versprodung. Die dazu benotigte Belichtungszeit ist ebenfalls in Tabelle 4 aufgeführt.

**Tabelle 4:**

| Belichtungszeit (h) bis zum Erreichen eines Yellowness Index (YI) = 7 sowie bis zum Verspröden | | |
|---|---|---|
| UV-Absorber | Belichtungszeit (h) bis | |
| | YI=7 | Versprödung |
| keiner | 990 | 1100 |
| 2 % Ph-2 | 2480 | 8040 |
| 2 % Ph-3 | 2560 | 5900 |
| 2 % Ph-4 | 2560 | 5550 |
| 2 % Ph-5 | 2690 | 7540 |
| 2 % To-2 | 2270 | 5900 |
| 2 % To-3 | 2400 | 5550 |
| 2 % To-4 | 2375 | 5060 |
| 2 % Xy-2 | 1850 | 3900 |
| 2 % Xy-3 | 1860 | 3900 |
| 2 % Xy-4 | 1950 | 3900 |

Beispiel 5: Nach der in Beispiel 4 beschriebenen Vorschrift hergestellte Filme werden in einem Umluftofen bei 130°C gealtert. Wie im genannten Beispiel werden die Afferungszet bis zum Erreichen eines Yellowness-Index von 7 sowie die Zeit bis zur Versprödung gemessen.

Tabelle 5 zeigt die erhaltenen Resultate.

**Tabelle 5:**

| Alterungszeit (h) bis zum Erreichen eines Yellowness Index (YI) = 7 sowie bis zum Verspröden | | |
|---|---|---|
| | Zeit in Stunden bei 130°C bis | |
| UV-Absorber | YI=7 | Versprödung |
| 2 % Ph-2 | 1840 | 7000 |
| 2 % Ph-3 | 5030 | 7000 |
| 2 % Ph-4 | 4170 | 7000 |
| 2 % Ph-5 | 5580 | 8000 |
| 2 % To-2 | 2460 | 4720 |
| 2 % To-3 | 2790 | 4720 |
| 2 % To-4 | 2750 | 4720 |
| 2 % Xy-2 | 750 | 3030 |
| 2 % Xy-3 | 790 | 2530 |
| 2 % Xy-4 | 820 | 3030 |

Beispiel 6: Wie in Beispiel 1 beschrieben werden Pölycarbonatfilme enthaltend 2 Gew.-% UV Absorber hergestellt und belichtet. In regelmäßigen Abständen wird die Zugfestigkeit [tensile strength] der Filme bei Raumtemperatur gemessen (Zuggeschwindigkeit [cross-speed] 20 mm/Min., Zuggewicht [dumb-bell] gemäß DIN 53448/1, Probenbreite 10 mm, Probendicke 20 µm). Tabelle 6 zeigt, nach welcher Belichtungszeit nur noch 50 % der ursprünglichen Zugfestigkeit erreicht wird.

**Tabelle 6**

| UV-Absorber | Belichtungszeit (h) bis 50% Zugfestigkeit |
|---|---|
| keiner | 690 |
| 2 % Xy-1 | 1420 |
| 2 % Ph-1 | 1670 |
| 2%To-1 | 1860 |

Beispiel 7: 3 kg Polybutylenterephthalat-Pulver (Crastin® S 600) werden jeweils mit 0,1 Gew.-% Pentaerythrityltetrakis(3-[3',5'-di-tert.butyl-4'-hydroxyphenyl]-propionat), 0,4 Gew.-% Tris(2,4-di-tert.butyl-phenyl)-phosphit und 0,5 Gew.-% des in Tabelle 7 angegebenen UV-Absorbers in einem Henschel-Mischer für 2 Minuten trocken gemischt und anschließend in einem Berstorff-Doppelschneckenextruder bei einer Drehzahl von 100/Min. und einer Temperatureinstellung von 230°C/240°C/250°C/250°C zu Granulat verarbeitet. Aus jeder Mischung werden mit Hilfe einer Spritzgußanlage (Typ Arburg L, Materialtemperatur 260°C, Werkzeugtemperatur 70°C) Platten der Abmessung 67 mm x 43 mm und 1 mm Dicke hergestellt.

Die Platten werden nach 30 Tagen Lagerung bei Raumtemperatur in einem Atlas Weatherometer Cl 65 bei einer Schwarztafeltemperatur von 63°C und einer relativen Feuchte von 60 % belichtet, wobei ein Beregnungszyklus von 102 Min. trocken/18 Min. naß eingestellt wird. In regelmäßigen Intervallen wird die Verfärbung der Proben durch Messung des Yellowness Index (YI, Methode ASTM D 1925) überprüft. In Tabelle 7 ist die Belichtungszeit angegeben, in der eine Zunahme des Yellowness-Index um ΔYI = 10 stattfindet.

**Tabelle 7**

| UV-Absorber | Belichtungszeit (h) bis ΔYI = 10 |
|---|---|
| 0.5 % Xy-1 | 1520 |
| 0.5 % To-1 | 2850 |
| 0.5 % Ph-1 | 3130 |

Beispiel 8: Polyamid-6 Pulver (Ultramid® B3S, Hersteller BASF) wird mit den in Tabelle 8 angegebenen Stabilisatoren in einem Henschel-Mischer für 2 Minuten trocken gemischt und anschließend in einem Berstorff-Doppelschneckenextruder bei einer Drehzahl von 95/Min. und einer Temperatureinstellung von 230°C/235°C/240°C/240°C verarbeitet. Die Mengen an Stabilisator sind in Gew.-% angegeben, bezogen auf die eingesetzte Menge Polyamid. Aus jeder Mischung werden mit Hilfe einer Spritzgußanlage (Typ Arburg L, Materialtemperatur 240°C, Werkzeugtemperatur 80°C) Platten von 2 mm Dicke hergestellt.

Die Platten werden in einem Atlas Weatherometer Cl 65 bei einer Schwarztafeltemperatur von 63°C und einer relativen Feuchte von 60 % belichtet, wobei ein Beregnungszyklus von 102 Min. trocken/18 Min. naß eingestellt wird. Gemessen wird die Zeit, bis zu der Risse auf den Platten sichtbar werden. Die Meßergebnisse sind in Tabelle 8 dargestellt.

Neben den oben genannten erfindungsgemäßen Stabilisatoren werden folgende zusätzliche Stabilisatoren eingesetzt:
A N,N'-Bis(3-[3',5'-di-tert.butyl-4'-hydroxyphenyl]-propionyl)hexamethylendiamin.
B Tris(2,4-di-tert.butyl-phenyl)-phosphit,
C Kondensationsprodukt aus N,N'-Bis-(2,2,6,6-Tetramethyl-4-piperidyl)-hexamethylendiamin und 4-tert.Octylamino-2,6-dichlor-1,3,5-s-triazin mit dem Smp. 120-150°C.

**Tabelle 8:**

| Zeit (h) bis zum Auftreten von Rissen | |
|---|---|
| Stabilisatoren | Zeit (h) |
| keiner | 1050 |
| 0.2 % A + 0.2 % B | 2620 |
| 0.2 % A + 0.2 % B + 0.3 % Xy-1 | 2950 |
| 0.2 % A + 0.2 % B + 0.3 % To-1 | 3320 |
| 0.2 % A + 0.2 % B + 0.3 % Ph-1 | 3930 |
| 0.2 % A + 0.2 % B + 0.3 % Xy-1 + 0.3 % C | 5900 |
| 0.2 % A + 0.2 % B + 0.3 % To-1 + 0.3 % C | 6200 |
| 0.2 % A + 0.2 % B + 0.3 % Phl + 0.3 % C | >6200 |

Beispiel 9: Polyoxymethylen (Hostatform® C) wird in einem Brabender Plasticorder mit jeweils 0,3 Gew.-% Calciumstearat, 0.3 Gew .% eines Stabilisators der Formel 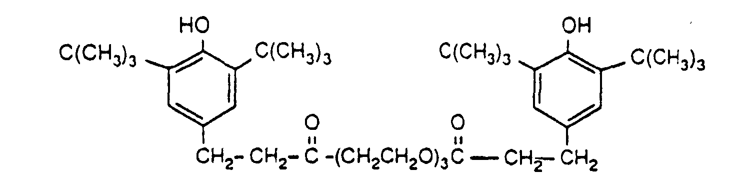 und 0,3 Gew.-% des in Tabelle 9 angegebenen UV Absorbers für 7 Minuten bei 190°C und 30 Umdrehungen/Minute geknetet. Anschließend wird das Material bei 190°C unter einem Druck von 3000 psi zu Platten von 1 mm Dicke gepreßt; die Verarbeitungsdauer bei diesem Schritt beträgt 3 Minuten.
Die Platten werden bei 60°C und einer Luftfeuchtigkeit von 23 % mit einer UV-A Quelle im Abstand von 20 cm belichtet.
Die UV-A Quelle besteht aus 5 Leuchtstofflampen TL/09 und 5 Lampen TL/12 (Wellenlängenbereich 295-400 nm). In regelmäßigen Intervallen wird der Yellowness Index (YI, Methode ASTM D 1925) gemessen, der bei UV-Belichtung von Polyoxymethylen ein Maximum durchläuft. Dieses Maximum wird verursacht durch ein erstes Auftreten von visuell noch nicht feststellbaren Mikrorissen. Bei weiterer Belichtung werden zu einem späteren Zeitpunkt Risse in den Platten sichtbar. In Tabelle 9 sind die Belichtungszeiten in Wochen bis zum Erreichen des Maximum des Yellowness-Index sowie bis zum Auftreten von visuell feststellbaren Rissen angegeben.

**Tabelle 9:**

| Belichtungsdauer in Wochen bis YI-Maximum bezw. bis zum Auftreten von visuell feststellbaren Rissen auf den Probenplatten | | |
|---|---|---|
| | Belichtungsdauer (Wochen) bis | |
| UV-Absorber | YI-Maximum | Rissbildung |
| 0.3% Xy-5 | 8 | 16 |
| 0.3% To-5 | 10 | 20 |
| 0.3 % Ph-5 | 16 | 25 |

Die in den Beispielen 1 - 9 dargelegten Testergebnisse zeigen deutlich verbesserte Eigenschaften bei Verwendung der erfindungsgemäßen Stabilisatoren (Diphenyl- und Di-p-tolylderivate des 1,3,5-Triazins) gegenüber den bekannten Dixylylderivaten.

## Patentansprüche

1. Gegen Schädigung durch Licht, Sauerstoff und Hitze stabilisierte Polymerzusammensetzung, enthaltend
a) mindestens ein thermoplastisches Polymer, das in der Hauptkette Heteroatome enthält, und
b) als Stabilisator mindestens eine Hydroxyphenyltriazin-Verbindung der Formel I, 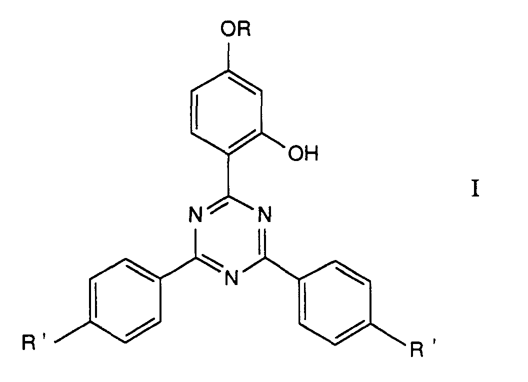
worin R C₁-C₁₈-Alkyl, durch Halogen oder C₁-C₁₂-Alkoxy substituiertes C₂-C₆-Alkyl oder Benzyl bedeutet und R' Wasserstoff oder Methyl bedeutet,
wobei Zusammensetzungen ausgenommen sind, welche durch Behandeln von Fasermaterial der Komponente (a) mit dem Stabilisator der Komponente (b) erhalten werden.

2. Polymerzusammensetzung gemäß Anspruch 1, **dadurch gekennzeichnet, daß** die Komponente a) ein Polycarbonat, Polyester, Polyamid, Polyacetal, Polyphenylenoxid oder Polyphenylensulfid ist.

3. Polymerzusammensetzung gemäß Anspruch 1, **dadurch gekennzeichnet, daß** die Komponente a) ein Polycarbonat ist.

4. Polymerzusammensetzung gemäß Anspruch 1, **dadurch gekennzeichnet, daß** die Komponente b) eine Verbindung der Formel I ist, worin R C₁-C₁₂-Alkyl oder Benzyl ist.

5. Polymerzusammensetzung gemäß Anspruch 1, **dadurch gekennzeichnet, daß** die Komponente b) eine Verbindung der Formel I ist, worin R C₃-C₆-Alkyl ist.

6. Polymerzusammensetzung gemäß Anspruch 1, **dadurch gekennzeichnet, daß** die Komponente b) eine Verbindung der Formel I ist, worin R' Wasserstoff ist.

7. Polymerzusammensetzung gemäß Anspruch 1, enthaltend auf 100 Gew.-Teile des Polymeren der Komponente a) 0,1 bis 15 Gew.-Teile des Stabilisators der Komponente b).

8. Polymerzusammensetzung gemäß Anspruch 1, enthaltend außer den Komponenten a) und b) einen oder mehrere andere Stabilisatoren oder sonstige Zusätze.

9. Verfahren zum Stabilisieren von thermoplastischen Polymeren, die in der Hauptkette Heteroatome enthalten, gegen deren Schädigung durch Licht, Sauerstoff und Hitze, **dadurch gekennzeichnet, daß** man diesen als Stabilisator eine Verbindung der Formel I gemäß Anspruch 1 zusetzt.

10. Verwendung von Verbindungen der Formel I gemäß Anspruch 1 zum Stabilisieren von thermoplastischen Polymeren, die in der Hauptkette Heteroatome enthalten, gegen Schädigung durch Licht, Sauerstoff und Hitze.

11. Verwendung der in Anspruch 1 definierten Polymerzusammensetzung zur Herstellung eines geformten Gegenstandes.

12. Verwendung gemäß Anspruch 11 zur Herstellung von Mehrschichtsystemen, wobei die äußere(n) Schicht(en) in einer Dicke von 10-100 µm aus einer Polymerzusammensetzung gemäß Anspruch 1 besteht, während die innere Schicht aus einem Polymeren besteht, das gegebenenfalls wenig oder keinen Stabilisator der Formel I enthält.

## Claims

1. A polymer composition stabilised against damage by light, oxygen and heat, comprising
a) at least one thermoplastic polymer that comprises hetero atoms in the main chain, and
b), as stabiliser, at least one hydroxyphenyltriazine compound of formula I 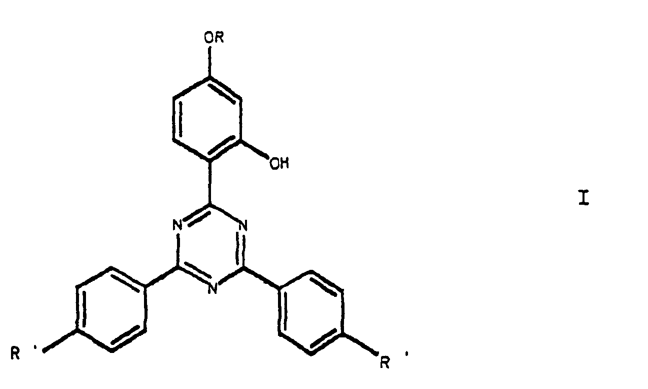
wherein R is C₁-C₁₈alkyl, C₂-C₆alkyl substituted by halogen or by C₁-C₁₂alkoxy, or is benzyl and R' is hydrogen or methyl,
with the exception of compositions obtained by treating fibre material of component (a) with the stabiliser component (b).

2. A polymer composition according to claim 1, wherein component a) is a polycarbonate, polyester, polyamide, polyacetal, polyphenylene oxide or polyphenylene sulfide.

3. A polymer composition according to claim 1, wherein component a) is a polycarbonate.

4. A polymer composition according to claim 1, wherein component b) is a compound of formula I wherein R is C₁-C₁₂alkyl or benzyl.

5. A polymer composition according to claim 1, wherein component b) is a compound of formula I wherein R is C₃-C₆alkyl.

6. A polymer composition according to claim 1, wherein component b) is a compound of formula I wherein R' is hydrogen.

7. A polymer composition according to claim comprising from 0.1 to 15 parts by weight of the stabiliser component b) per 100 parts by weight of the polymer component a).

8. A polymer composition according to claim 1, comprising in addition to components a) and b) one or more other stabilisers or other additives.

9. A method for stabilising thermoplastic polymers that comprise hetero atoms in the main chain against damage by light, oxygen and heat, wherein a compound of formula I according to claim 1 is added thereto as stabiliser.

10. The use of a compound of formula I according to claim 1 for stabilising thermoplastic polymers that comprise hetero atoms in the main chain against damage by light, oxygen and heat.

11. The use of the polymer composition defined in claim 1 for the production of a shaped article.

12. The use according to claim 11 for the production of multi-layer systems wherein the outer layer(s) consist(s) of a polymer composition according to claim 1 in a thickness of 10 - 100 µm, while the inner layer consists of a polymer that may comprise little or no stabiliser of formula I

## Revendications

1. Composition polymère stabilisée contre la dégradation induite par la lumière, par l'oxygène et par la chaleur, contenant
a) au moins un polymère thermoplastique comportant des hétéroatomes dans la chaîne principale, et
b) en tant que stabilisant au moins un composé de type d'hydroxyphényltriazine de formule I 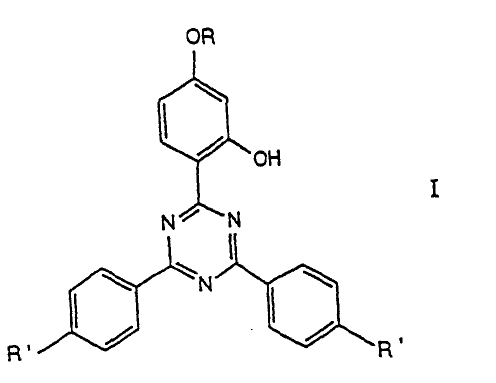
dans laquelle R est alkyle en C₁-C₁₈, benzyle ou alkyle en C₂-C₆ substitué par halogène ou alcoxy en C₁-C₁₂ et R' représente l'hydrogène ou méthyle, des compositions obtenues par traitement de la matière fibreuse du composant (a) par le stabilisant du composant (b) étant exclues.

2. Composition polymère selon la revendication 1, **caractérisée en ce que** le composant a) est un polycarbonate, un polyester, un polyamide, un polyacétal, un poly(oxyphénylène) ou un poly(suffure de phénylène).

3. Composition polymère selon la revendication 1, **caractérisée en ce que** le composant a) est un polycarbonate.

4. Composition polymère selon la revendication 1, **caractérisée en ce que** le composant b) est un composé de formule I, dans lequel R représente alkyle en C₁-C₁₂ ou benzyle.

5. Composition polymère selon la revendication 1, **caractérisée en ce que** le composant b) est un composé de formule I, dans lequel R représente alkyle en C₃-C₆.

6. Composition polymère selon la revendication 1, **caractérisée en ce que** le composant b) est un composé de formule I, dans lequel R' est l'hydrogène.

7. Composition polymère selon la revendication 1 contenant pour 100 parties en poids du polymère du composant a) de 0,1 à 15 parties en poids du stabilisant du composant b).

8. Composition polymère selon la revendication 1, contenant outre les composants a) ou b) un ou plusieurs stabilisants ou autres additifs.

9. Procédé pour stabiliser des polymères thermoplastiques qui comportent des hétéroatomes dans la chaîne principale, contre la dégradation induite par la lumière, par l'oxygène et, par la chaleur, **caractérisé en ce que** l'on ajoute à ces composés en tant que stabilisant un composé de formule I selon la revendication 1.

10. Utilisation des composés de formule I selon la revendication 1 pour stabiliser des polymères thermoplastiques qui comportent des hétéroatomes dans la chaîne principale, contre la dégradation induite par la lumière, par l'oxygène et par la chaleur.

11. Utilisation de la composition polymère définie dans la revendication 1 pour préparer des objets moulés.

12. Utilisation selon la revendication 11 pour la préparation de systèmes multicouches, les couches extérieures étant constituées d'une composition polymère selon la revendication 1 ayant une épaisseur de 10 à 100 µm, tandis que les couches intérieures sont constituées d'un polymère qui éventuellement ne contient pas ou peu de stabilisant de formule I.
